# EUROPEAN PATENT SPECIFICATION

(11) **EP 2 847 959 B1**
(45) Date of publication and mention of the grant of the patent: **08.07.2020**
(21) Application number: 12743091.6
(22) Date of filing: 09.05.2012
(51) Int. Cl.: H04L 29/06, H04L 12/14, H04M 15/02, H04M 15/00, H04M 15/12, H04M 15/08

(54) **CHARGING DATA CONTROL IN AN IP TELECOMMUNICATIONS NETWORK**
VERGEBÜHRUNGSDATENKONTROLLE IN EINEM IP TELEKOMMUNIKATIONSNETZWERK
COMMANDE DE DONNÉES DE FACTURATION DANS UN RÉSEAU DE TÉLÉCOMMUNICATION IP

(43) Date of publication of application: 18.03.2015
(73) Proprietor: Telefonaktiebolaget LM Ericsson (publ), 164 83 Stockholm (SE)
(72) Inventor: NOLDUS, Rogier August Caspar Joseph, NL-5052 BM Goirle (NL); HUIJSMANS, Martien, 5063 EE Oisterwijk (NL)
(74) Representative: Haseltine Lake Kempner LLP
(86) International application number: PCT/EP2012/058551
(87) International publication number: WO 2013/167182

(56) References cited:
- WO-A1-2010/149203
- WO-A1-2011/010320
- US-A1- 2008 273 679

## Description

### Technical Field

The present invention relates to a telecommunications network, and in particular to methods and network nodes for transferring charging data between network nodes.

### Background

In a telecommunications network, for example based on the IP Multimedia Subsystem (IMS) architecture, value added services can be provided through a Session Initiation Protocol - Application Server (SIP-AS). Parties to the call can be connected through respective Media Gateway Control Functions (MGCFs). This would be the case when these parties are subscribers of a Circuit switched (CS) network. There can be a direct SIP connection between the SIP-AS and the MGCF. In such a case, there is no need for complete IMS network infrastructure.

One common requirement in such a case is for the value added service (VAS) to be able to place service-related data in the network-generated charging record; specifically, the charging record generated by the MGCF. For example, this service-related data may indicate the party or parties to be charged for the call or may comprise a rate indicator, or the like.

As one illustrative example, a call is established from a calling party in the CS network to a freephone number and the call is routed towards the IMS network, where a Next Generation Intelligent Networks (NG-IN) service (that is, the freephone service), hosted on a SIP-AS, is invoked from an MGCF. The NG-IN establishes a call towards a called party, such as a service desk, and this call is also established through a second MGCF. The NG-IN might also apply user interaction (such as playing an announcement, or collecting user input) for the call from the calling party or for the call towards the called party, in which case the user interaction might be done through Interactive Voice Response (IVR) in the circuit switched network, and the call establishment towards the IVR is achieved through a third MGCF.

In such a case, the MGCF through which the call from the calling party is established generates a first charging record, the second MGCF through which the call towards the called party is established generates a second charging record, and the third MGCF through which the call towards the IVR is established generates a third charging record. Also, the NG-IN will typically generate a charging record.

Charging record correlation is a designated method for combining charging records from different nodes, described in 3GPP TS 32.240. For example, the charging record generated by the MGCF for the call from the calling party may be correlated with the charging record generated by the SIP-AS (NG-IN) for this call. To allow this, the charging records contain the same IMS Charging IDentifier (ICID). The MGCF generates an ICID when it starts the SIP session, and places the ICID in the P-charging-vector (PCV) SIP header in the SIP Invite request towards the NG-IN. The NG-IN, in turn, places the ICID in the charging record that it generates for this call. This allows for off-line correlation of these charging records.

However, charging record correlation is generally a costly and computing-intensive operation.

WO 2010/149203 A1 discloses a method for use in an IP Multimedia Subsystem in which a session control protocol such as the Session Initiation Protocol (SIP) is used to establish and manage sessions within the IMS. WO 2011/010320 A1 discloses a method for enabling exchange of dynamic charging information between a calling user and a called user. US 2008/0273679 A1 discloses a method for providing billing and usage data to downstream applications.

### Summary

It is the object to obviate at least some of the above disadvantages and provide an improved method and network nodes for transferring service related data in a telecommunications network, enabling charging data generation. The invention is defined by a method of generating charging data in an IP telecommunication network according to claim 1, a method for use in an MGCF of an IP telecommunication network according to claim 5, an MGCF for an IP telecommunication network according to claim 9 and a system according to claim 10. Further embodiments are defined by the dependent claims.

According to a first aspect of the present invention, there is provided a method of generating charging data for a call in an Internet Protocol (IP) telecommunications network. A Session Initiation Protocol (SIP) connection is established between a SIP Application Server (SIP-AS) and a Media Gateway Control Function (MGCF). Service related data corresponding to the call is defined in the SIP-AS, and the defined service related data is submitted in SIP signalling via the established SIP connection between the SIP-AS and the MGCF. The MGCF then generates the charging data, based on the submitted service related data.

According to a further aspect of the present invention, there is provided a method for use in an MGCF of an IP telecommunications network, for generating charging data for a call. A SIP connection is established between a SIP-AS and the MGCF. Service related data is received in SIP signalling via the established SIP connection between the SIP-AS and the MGCF, and the charging data is generated, based on the received service related data.

According to a further aspect of the present invention, there is provided an MGCF for an IP telecommunications network. The MGCF has a receiving unit, for receiving SIP messages, and for extracting service related data from SIP messages. The MGCF also has a conversion unit, for generating charging data from the extracted service related data, and for inserting the charging data into a charging record.

This has the advantage that it prevents the need for charging record correlation.

In an example of all aspects of the invention, the service related data comprises Service charging data.

In a further example of all aspects of the invention, the service related data is submitted in a SIP message header or in a SIP message body.

In a further example of all aspects of the invention, the MGCF is an MGCF with which the SIP-AS is establishing the call, or is an MGCF that is establishing the call with the SIP-AS.

In a further example of all aspects of the invention, the service related data is submitted from the SIP-AS to the MGCF while setting up the call, while the call is in progress, or when releasing the call.

In a further example of all aspects of the invention, the MGCF is associated with a calling party of the call, or with a called party of the call, or with a service resource function involved in the call.

In a further example of all aspects of the invention, the SIP connection is a direct SIP connection.

There is also disclosed a method of generating charging data for a call in an IP telecommunications network. In this method, a direct SIP connection is established between a SIP-AS and an MGCF. A request is sent from the SIP-AS to the MGCF for charging data relating to the call. The defined service related data is submitted in SIP signalling via the established direct SIP connection to the SIP-AS from the MGCF, and a charging record is generated in the SIP-AS, based on the received charging data.

Thus, the method also includes the possibility for MGCF providing charging-related data to a SIP-AS, via said direct SIP connection between SIP-AS and MGCF. This enables SIP-AS to apply real-time charging (e.g. pre-paid charging) for a service call, using the charging-related data received from MGCF. This usage of the method is particularly useful when the charging of the call is dependent on charging-related information available in MGCF. Without this method, real-time charging of a service call would not be possible, since SIP-AS would not, in real-time, have said charging-related information from MGCF available

### Brief description of the drawings

Figure 1 is a schematic diagram of a telecommunications network in accordance with an aspect of the invention.
Figure 2 is a flow chart, illustrating a method in accordance with an aspect of the invention.
Figure 3 is a schematic illustration of a part of a telecommunications network operating in accordance with an aspect of the invention.
Figure 4 is a schematic illustration of a part of a telecommunications network operating in accordance with an aspect of the invention.
Figure 5 is a schematic illustration of a part of a telecommunications network operating in accordance with an aspect of the invention.
Figure 6 is a schematic illustration of a part of a telecommunications network operating in accordance with an aspect of the invention.
Figure 7 is a schematic illustration of a part of a telecommunications network operating in accordance with an aspect of the invention.
Figure 8 is a schematic illustration of a part of a telecommunications network operating in accordance with an aspect of the invention.
Figure 9 is a schematic illustration of a part of a telecommunications network operating in accordance with an aspect of the invention.
Figure 10 is a schematic illustration of a part of a telecommunications network operating in accordance with an aspect of the invention.

### Detailed description

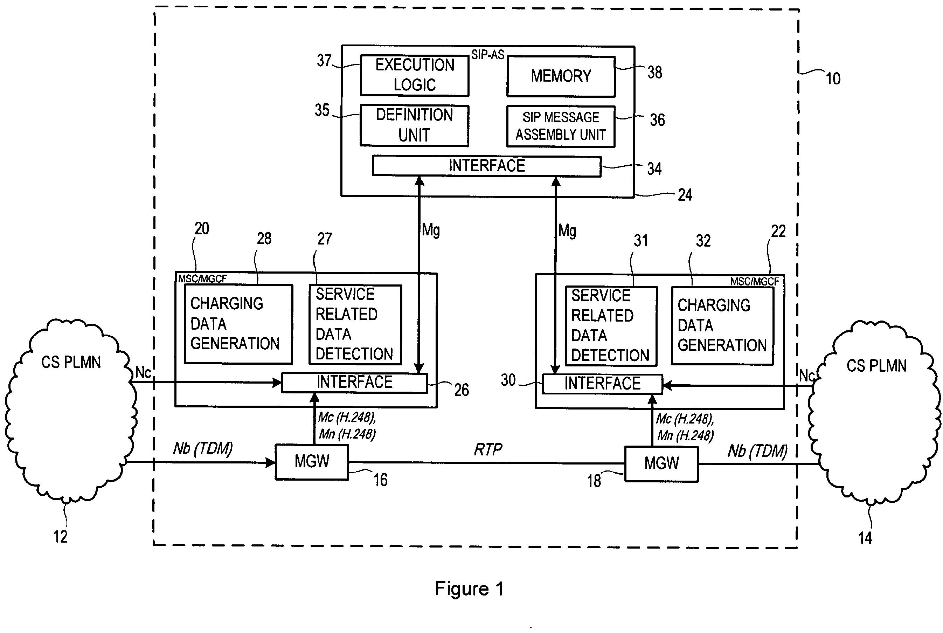

Figure 1 shows a part of a telecommunication network. More specifically, Figure 1 shows relevant nodes of an IP Multimedia Core Network Subsystem 10, to which are connected a first circuit switched (CS) network 12 and a second circuit switched (CS) network 14. In this illustrated embodiment, the first CS network 12 and second CS network 14 are circuit switched Public Land Mobile Networks (PLMNs), though they could be any CS network.

Although the invention is described herein with reference to IP Multimedia Subsystem (IMS) architecture, the invention is also applicable to other Session Initiation Protocol (SIP) based architecture.

Each of the CS networks 12, 14 is connected to a respective Media gateway (MGW) 16, 18, and to a respective Mobile Switching Centre (MSC) 20, 22. In the architecture in Figure 1, as is relatively common, the MSC has a built-in Media Gateway Control Function (MGCF).

Each illustrated MGW 16, 18 represents an integrated Mobile Media gateway (M-MGW) and IMS Media gateway (IMS-MGW). In such a case, the reference point between the MSC 20, 22 and the respective M-MGW (Mc) and the reference point between MGCF and the respective IMS-MGW (Mn) may be combined into an integrated reference protocol.

The various reference points (Nc, Mg, Mc etc.) as well as the protocols used on these reference points (ISUP, SIP, H.248) are described in 3GPP TS 23.002. They are well known, so are not further explained here.

Value added services (VAS) may be applied in a Circuit switched (CS) network by means of (SIP) signaling support, through a Session Initiation Protocol Application Server (SIP-AS) 24.

As shown in Figure 1, the MGCF in the MSC 20 has interface circuitry 26 for establishing the required interfaces with the CS network 12, the respective MGW 16 and the SIP-AS 24, amongst other nodes, and also has a receiving unit 27 for receiving service related data in a SIP message, as described in more detail below, and for decomposing such messages. The MGCF also includes a conversion unit 28 for generating charging data from the received service related data. The general form of the MGCF is conventional, and will not be described further herein.

Similarly, the MGCF in the MSC 22 has interface circuitry 30 for establishing the required interfaces with the CS network 14, the respective MGW 18 and the SIP-AS 24, amongst other nodes, and also has a receiving unit 31 for receiving service related data in a SIP message, as described in more detail below, and for decomposing such messages. The MGCF also includes a conversion unit 32 for generating charging data from the received service related data. Again, the general form of the MGCF is conventional, and will not be described further herein.

The SIP-AS 24 has interface circuitry 34 for establishing the required interfaces with the MGCFs, amongst other nodes. In addition, the SIP-AS 24 has a definition unit 35 to select service related data to be sent to an MGCF as described in more detail below, and a SIP message assembly unit 36 for incorporating service related data into SIP message. The SIP-AS also includes execution logic 37 for operating on dynamic and static data, to be combined into SIP messages, and a memory 38 to store this specific data. The general form of the SIP-AS 24 is conventional, and will not be described further herein.

VAS in an IMS network is specified for the ISC reference point, which runs between the SIP-AS and a Serving - Call Session Control Function (S-CSCF), and for the Ma reference point, which runs between the SIP-AS and an Interrogating - Call Session Control Function (I-CSCF). However, some networks do not have full IMS infrastructure, and the architecture depicted in Figure 1 may be used for applying SIP based VAS in a CS network without the need for IMS infrastructure.

Thus, as shown in Figure 1, there is a direct connection between the SIP-AS 24 and the two MGCFs in the respective MSCs 20, 22. The Mg reference point is specified for a network-to-network interface (NNI) from an MGCF. Thus, a CS network and an IMS network may be interconnected by the MGCF, whereby the MGCF exposes the Mg reference point towards the IMS network, for example to and from an I-CSCF or a Breakout Gateway Control Function (BGCF). IMS does not formally specify a reference point between an MGCF and a SIP-AS. However, the Mg reference point can be used in practice for this purpose.

A direct SIP connection as described here may be used for applying SIP-AS in multi-vendor CS network, or in a single vendor network, for example for deploying SIP based Next Generation Intelligent Networks (NG-IN) services, without the need for IMS network infrastructure.

For example, in the case of a multi-vendor CS network, an NG-IN service such as freephone, toll-free, group call, Collect call etc., may be invoked by routing the call towards the IMS network, where it enters the IMS network through the MGCF. The MGCF then sends a SIP Invite request directly to the SIP-AS. The SIP-AS acts as a User Agent Server (UAS) and applies the service to the call. For example, it may establish the call to a service desk, to a destination party, to an interactive voice response system etc.

Invoking the SIP-AS directly from the MGCF allows the VAS to be applied in a network without IMS infrastructure. The SIP-AS gains control over the call and has the ability to apply VAS as described above, including connecting the call to a destination, disconnecting the call, establishing new connections, playing announcements, and applying on-line charging (call duration monitoring). The Mg reference point from the MSC in fact uses a VAS protocol.

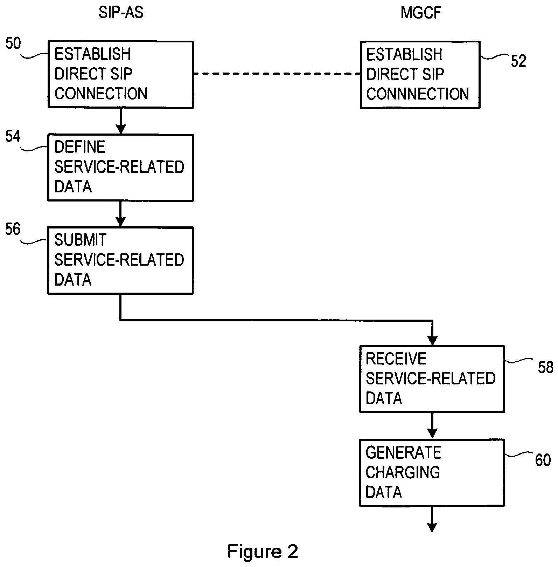

Figure 2 is a flow chart, illustrating in general terms a method in accordance with an aspect of the invention.

The method begins when a Media Gateway Control Function (MGCF) invokes a Session Initiation Protocol Application Server (SIP-AS), in order to request a Value Added Service (VAS). The specific VAS may require the establishment of a direct connection between the MGCF and the SIP-AS, and may also require the establishment of one or more other direct connections between the SIP-AS and a respective MGCF. For the purposes of Figure 2, only one of those direct connections is considered. Thus, in steps 50, 52, a direct SIP connection is established between the MGCF and the SIP-AS in a conventional manner.

In step 54, the SIP-AS defines service-related data. The service-related data may for example identify the service being provided as well as the identity of the parties, etc.

In step 56, the SIP-AS submits the service-related data to the MGCF in the SIP signalling with that MGCF. For example, the SIP Invite used by the SIP-AS for establishing a call towards a remote party may include Service charging data. However, as will be described in more detail below, the service-related data can be included at any point in a SIP signalling from the SIP-AS to the MGCF.

In step 58, the MGCF receives the service-related data, for example in the form of Service charging data, from the SIP-AS.

In step 60, the MGCF generates a Charging record for the call, using charging data generated on the basis of the service-related data received from the SIP-AS. If the service-related data is in the form of Service charging data, this can be included directly and transparently in the Charging record. The inclusion by the MGCF of service-related data received from SIP-AS into the charging record may be done by encoding this service-related data into specific data format, in accordance with formal charging record format specification.

This has the advantage that the Charging record(s) generated by the MGCF for the individual call legs will include the necessary service charging data that is needed for charging this call, and hence there is no need for costly off-line charging record correlation.

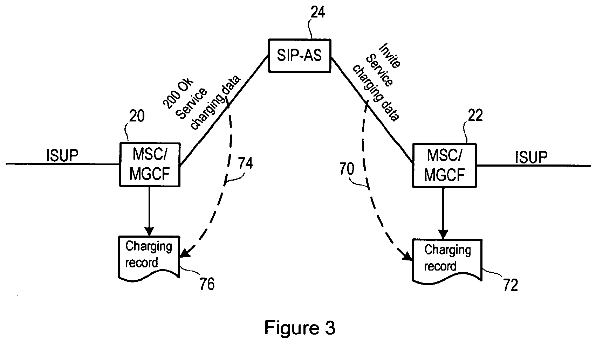

This is illustrated schematically in Figure 3, which shows the SIP-AS 24 and the two MSCs 20, 22, each incorporating a respective MGCF.

When the VAS is required, the SIP-AS (NG-IN) 24 is invoked from MGCF in the MSC 20 in the manner described above. In response, the SIP-AS 24 forwards a SIP Invite request to the MGCF in the MSC 22 for establishing a call towards a destination party. As shown in Figure 3, it may add service-related data to the SIP Invite request. Also, the SIP-AS returns a SIP Invite response to the MGCF in the MSC 20 from which it had received the Invite request related to the call from the calling party. The SIP-AS 24 may add service-related data to the SIP Invite response that it returns to the MGCF in the MSC 20.

The respective MGCF includes this service-related data, e.g. in the form of service charging data, transparently in the charging record.

The SIP-AS may provide the Service-related data to one or more of (i) the MGCF associated with the calling party, (ii) the MGCF associated with the called party or (iii) the MGCF associated with the IVR. This may be decided by the SIP-AS and depends on service requirement from the SIP-AS.

More specifically, Figure 3 shows the case where service-related data, in the form of service charging data is included in the Invite request sent from the SIP-AS 24 towards the MSC/MGCF 22, for establishing a call towards a destination party. As shown by the arrow 70, this service charging data is included in the Charging record 72 generated by the MSC/MGCF 22 for this call. Thus, this shows the ability of the SIP-AS 24 to add charging data to the Charging record generated by an MGCF, for a SIP session established by the SIP-AS 24 through that MGCF.

Figure 3 also shows the case where service-related data, in the form of service charging data is included in the Invite response sent from the SIP-AS 24 towards the MSC/MGCF 20, for answering the call towards the originating party. As shown by the arrow 74, the service charging data is included in the Charging record 76 generated by the MSC/MGCF 20 for this call. Thus, this shows the ability of the SIP-AS 24 to add charging data to the Charging record generated by an MGCF, for a SIP session established towards the SIP-AS 24 through that MGCF.

The service charging data that the SIP-AS 24 may place in the network generated charging record may take the form of arbitrary data. This data may comprise a combination of Integer value(s), Boolean value(s), Text string(s) etc. The text string could, in one embodiment, be a URL, pointing to a data store where the off-line charging system may obtain the required charging data; in that case, the SIP-AS 24 would have placed the service charging data in the location defined by that URL. Thus, the service charging data can take any suitable form, and is not further elaborated on.

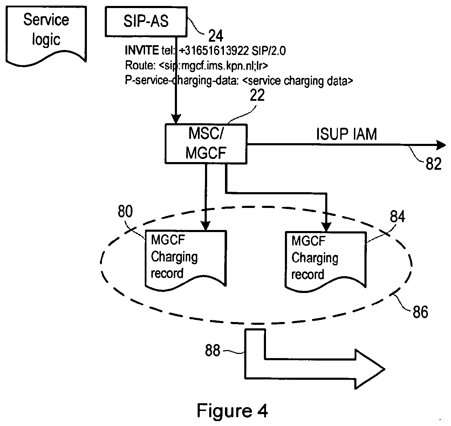

Figure 4 shows in more detail the capability of the SIP-AS 24 to place service data in the charging record generated by an MGCF, for a SIP session established from the SIP-AS 24, towards that MGCF. The service charging data is provided by SIP-AS in the same direction as the call establishment, and hence this is referred to as the 'forward direction'.

The Invite request from the SIP-AS 24 towards the MSC/MGCF 22, for the establishment of a call, contains a destination number and routing information, and also contains a set of charging data:
P-service-charging-data: <service charging data>.

The MGCF places this charging data in the Diameter MGCF charging record 80 that it generates for this SIP session. The SIP Invite sent to the MGCF results in the establishment of a call 82 into the CS network, to the specified destination number. Specifically, the MGCF generates an ISUP Initial address message (IAM) and forwards the IAM internally to the MSC within which the MGCF is integrated. The MSC will, in its turn, generate an external ISUP IAM for establishment of the call 82. The MSC generates a charging record (or Call detail record, CDR) 84 for this call. Depending on the capability of the MSC, the MGCF charging record 80 and the MSC CDR 84 may be combined into a composite charging record 86.

The MGCF charging record 80, or the composite charging record 86, contains the information that is needed for the charging of this call leg, including the service charging data. As shown by the arrow 88, the MGCF charging record 80 and the MSC CDR 84, or the composite charging record 86, are then passed to the network charging system (not shown), for off-line charging record processing.

The method as depicted and described above implies that the service charging data is provided to the MGCF at call establishment. However, as will be described below, service charging data may be added to the MGCF charging record 80 at a later point in the call, e.g. at call answer or at call release.

The P-service-charging-data will not be reflected on the ISUP IAM; there is no mapping defined, between SIP and ISUP, for this SIP header. As described above, the MGCF and the MSC, comprised in an integrated mobile soft switch (MSS), each generate a respective charging record 80, 84. These two charging records may be collated in a composite charging record 86.

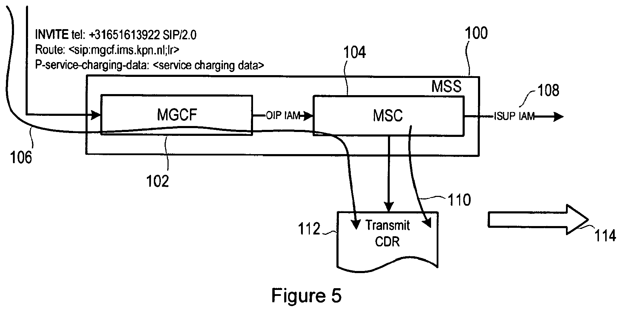

In a practical embodiment of the invention, it may be possible that the MSS generates only an MGCF charging record or only an MSC CDR. Implementation of the MSS would, in such case, have to be such that the service charging data provided by the SIP-AS is placed into the charging record or CDR that is generated by the MSS. Figure 5 illustrates a possible embodiment of such an integrated mobile soft switch (MSS) 100, comprising the MGCF 102 and the MSC 104.

The service charging data 106 from the SIP-AS 24 is conveyed internally in the MSS 100 from the MGCF 102 to the MSC 104. The Open Intranode Protocol (OIP), a non-standardized node-internal representation of ISUP, can be used for signalling between the Application Modules (AM), a non-standardized grouping of logic software components, in the MSS, including the MGCF 102 and the MSC 104, and is enhanced to comprise a parameter for conveying the service charging data. For example, the service charging data can be carried in a designated parameter in the Initial address message (IAM). Since this parameter is for MSC-internal use, the MSC will not include the parameter in the ISUP IAM 108 that is sent further.

This enables the MSC 104 to include the service charging data (as well as regular charging data 110) into the Transit CDR 112. As shown by the arrow 114, the Transit CDR 112 is then passed to the network charging system (not shown), for off-line charging record processing.

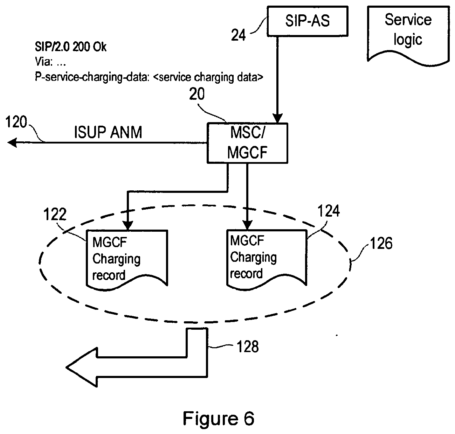

Figure 6 shows in more detail the capability of the SIP-AS 24 to place service data in the charging record generated by an MGCF, for a SIP session established from that MGCF towards the SIP-AS 24. The service charging data is provided by SIP-AS in the opposite direction to the call establishment, and hence this is referred to as the 'backward direction'.

The 200 Ok final response from the SIP-AS 24 towards the MSC/MGCF 20, when the call is answered towards the calling party, contains a set of charging data: P-service-charging-data: <service charging data>.

The MSC/MGCF 20 places this charging data in the Diameter charging record that it generates for this SIP session. The 200 Ok received from SIP-AS is translated into an ISUP Answer message (ANM) 120, which is sent towards the calling party.

The MSC generates a charging record (or Call detail record, CDR) 122 for this call. The MGCF generates a charging record 124 containing the service charging data. Depending on the capability of the MSC, the MGCF charging record 124 and the MSC CDR 122 may be combined into a composite charging record 126.

The MGCF charging record 124, or the composite charging record 126, contains the information that is needed for the charging of this call leg, including the service charging data. As shown by the arrow 128, the MGCF charging record 124 and the MSC CDR 122, or the composite charging record 126, are then passed to the network charging system (not shown), for off-line charging record processing.

The method as depicted and described above implies that the service charging data is provided to the MGCF at call answer. However, as will be described below, service charging data may be added to the MGCF charging record 124 at other point in the call, e.g. at call establishment or at call release.

The P-service-charging-data will not be reflected on the ISUP ANM.

As described with reference to Figure 5, the MGCF and the MSC can be comprised in an integrated mobile soft switch (MSS), which generates only an MGCF Charging record or only a MSC Transit CDR.

Figure 4 depicts how service charging data may be added to the charging record from the MGCF, in the forward direction, at call establishment.

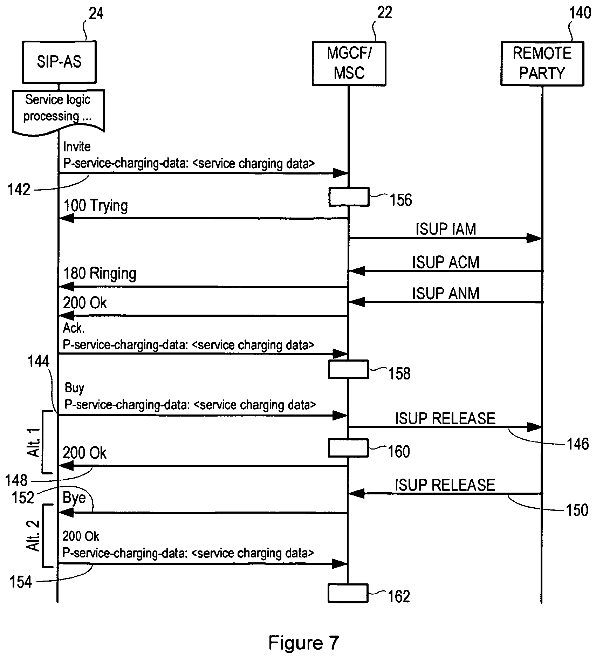

Figure 7 now shows how service charging data may be added to the charging record from the MGCF, in the forward direction, at various points in the call to the remote party. Specifically, Figure 7 shows messages passed between the SIP-AS 24, the MSC/MGCF 22 and the remote party 140.

The call is set up in response to the SIP-AS 24 sending a SIP Invite 142 to the MGCF. In response, the MGCF generates an ISUP IAM towards the remote party 140, and sends a SIP 100 Trying message to the SIP-AS. The remote party sends an ISUP ACM to the MGCF, which sends a SIP 180 Ringing message to the SIP-AS.

When the call to the remote party 140 is answered, the remote party sends an ISUP ANM to the MGCF, which sends a 200 Ok message to the SIP-AS. The SIP-AS then sends an Ack message to the MGCF.

If the call towards the remote party is released by the SIP-AS (as shown in Alt 1), a Bye request 144 is sent to the MGCF, which sends an ISUP Release message 146 to the remote party 140 and a 200 OK message 148 to the SIP-AS.

If the call towards the remote party is released by the remote party (as shown in Alt 2), an ISUP Release message 150 is sent from the remote party 140 to the MGCF, which sends a Bye request 152 to the SIP-AS. The SIP-AS sends a 200 OK message 154 to the MGCF.

During this process, the SIP-AS may include service charging data in the SIP signalling to the MGCF at one or more of the following points.

Firstly, the service charging data may be included in the Invite 142, in which case the MGCF adds this service charging data to the charging data it will write towards the Charging record at point 156 in Figure 7.

Secondly, the service charging data may be included in the Ack sent to the MGCF, in which case the MGCF adds this service charging data to the Charging record at point 158 in Figure 7.

If the call towards the remote party is released by the SIP-AS, then, thirdly, the Bye request 144 from the SIP-AS may contain service charging data. The MGCF adds this service charging data to the Charging record. The call is released, so the Charging record may be closed and written to file, although intermediate copies of the non-finalized Charging record can also be sent to the charging system while the call is in progress. When the call is released and the finalized Charging record is sent to the charging system, the charging system considers the Charging record to be 'complete'.

If the call towards the remote party is released by the remote party 140, then, fourthly, the 200 OK message 154 from the SIP-AS may contain service charging data. As before, the MGCF adds this service charging data to the Charging record and, as the call is released, the Charging record may be closed and written to file.

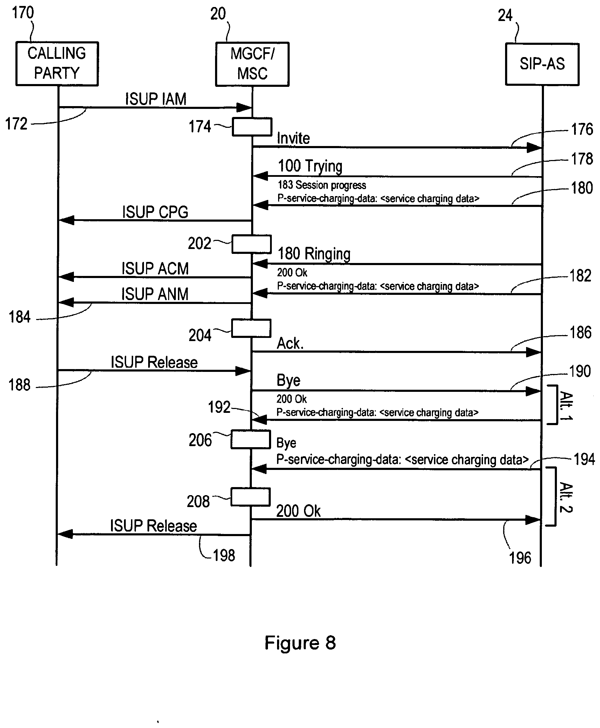

Somewhat similarly, Figure 8 depicts how service charging data may be added to the charging record from the MGCF, in backward direction, at various points in the call.

Specifically, Figure 8 shows messages passed between the calling party 170, the associated MSC/MGCF 20 and the SIP-AS 24.

The call is set up in response to the calling party 170 sending an ISUP IAM 172 to the MGCF 20. In response, the MGCF 20 prepares a charging record for the call at 174, and then sends SIP Invite 176 to the SIP-AS 24. In response, the SIP-AS 24 sends a SIP 100 Trying message 178 to the MGCF 20. The MGCF also receives a 183 Session progress message 180 from the SIP-AS. The 183 Session progress may be sent reliably, that is, it may be followed by a PRACK - 200 Ok, but this is not shown in Figure 8.

In response, the MGCF sends an ISUP CPG message to the calling party 170. The SIP-AS also sends a SIP 180 Ringing message to the MGCF, in response to which the MGCF sends an ISUP ACM to the calling party.

When the call to the remote party is answered, the SIP-AS a sends 200 Ok message 182 to the MGCF, which sends an ISUP ANM 184 to the calling party, and sends an Ack message 186 to the SIP-AS.

If the call from the calling party is released by the calling party (as shown in Alt 1), an ISUP Release message 188 is sent to the MGCF, which sends a Bye request 190 to the SIP-AS, which returns a 200 OK message 192.

If the call from the calling party is released by the SIP-AS (as shown in Alt 2), e.g. in reaction to call release by the remote party, a Bye request 194 is sent from the SIP-AS to the MGCF, which returns a 200 OK message 196, and sends an ISUP Release message 198 to the calling party.

During this process, the SIP-AS may include service charging data in the SIP signalling to the MGCF at one or more of the following points.

Firstly, the 183 Session progress message 180 may contain service charging data. Hence, the MGCF adds this service charging data to the charging data it will write towards the Charging record, at point 202 in Figure 8.

Secondly, after the call is answered, the 200 Ok message 182 from the SIP-AS may contain service charging data. If so, the MGCF adds this service charging data to the Charging record, at point 204 in Figure 8.

Thirdly, if the call is released by the calling party, the 200 Ok message 192 from the SIP-AS may contain service charging data. The MGCF adds this service charging data to the Charging record, at point 206 in Figure 8. In this case, the call is released, so the Charging record may be closed and written to file.

Fourthly, if the call from the calling party is released by the SIP-AS, the Bye request 194 from the SIP-AS may contain service charging data. The MGCF adds this service charging data to the Charging record, at point 208 in Figure 8. Again, the call is released and the Charging record may be closed and written to file.

The method described herein applies equally when there are additional outgoing call legs. For example, when the VAS involves the use of a special resource function (SRF) such as an Interactive Voice Response function (IVR), the SIP-AS establishes a SIP session towards an IVR in the CS network. The SIP-AS also generates a SIP session towards an associated MGCF, which generates an ISUP IAM towards the indicated IVR. As part of the SIP session towards the MGCF, the SIP-AS may also provide charging data for the Charging record that will be generated by the MGCF.

As another example, the VAS may require that multiple outgoing call legs are generated, e.g. for group call or for call hunting. In that case, there will be multiple SIP sessions, each associated with a respective outgoing call, and the SIP-AS may provide service charging data to the MGCF, so that the MGCF can add the data to the Charging record that it generates for that SIP session.

As described above, charging data is conveyed in a SIP message by a designated SIP header: P-service-charging-data. This SIP header may contain a text string (ASCII string) of arbitrary length. The encoding (internal structure) of the data contained in this header is service-specific.

Other methods for conveying the service charging data in SIP message may, however, also be devised and may be equally suitable for the invention. For example, the service charging data can be conveyed by a P-charging-vector (PCV), which is an existing SIP header described in IETF RFC 3455. It contains charging related data for the SIP session in which the header is transferred. The PCV comprises one or more header parameters. The PCV is extensible, and additional parameters may be added. An additional parameter may carry the service charging data, in the form of an ASCII string of arbitrary length, with service-specific internal structure. The advantage of such a string is that MSC/MGCF is likely to be prepared already to place the PCV into the charging record or CDR.

As another example, a SIP message may contain one or more SIP bodies. A SIP body contains application data, specific for the application that is requested with the SIP message. For example, a SIP Invite request may contain a Session Description Protocol (SDP) offer and a SIP Invite response may contain an SDP answer. By placing the Service charging data in a SIP body, we have greater flexibility for the format of the Service charging data. For example, the Service charging data may have the form of an XML script. Using an XML script allows for easy and transparent handling of the Service data; the Service is conveyed in a 'formatted' way and is then placed transparently into the Charging record or CDR. The inclusion of multiple SIP bodies in a SIP message is defined in IETF RFC 5621.

As described so far, charging information is supplied by a SIP-AS to one or more MGCF. However, it is also possible for MGCFs, involved in a SIP-AS controlled call (service call), controlled by VAS as described previously, to provide the SIP-AS with information about the charging of individual call legs. Charging information for a SIP-AS controlled call can then be aggregated in the SIP-AS. The SIP-AS may use the method described earlier to place an indication in the charging record of the respective MGCF, indicating that that charging record does not need to be considered for charging. The charging of the service call may then be based on a charging record generated by the SIP-AS.

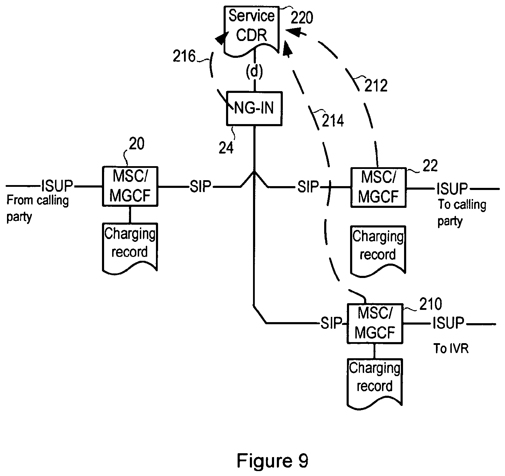

Figure 9 is a schematic diagram, illustrating a part of the network operating in this manner. Thus, Figure 9 shows a part of the network 10 shown in Figure 1. Integrated mobile soft switches (MSSs) 20, 22 each include a respective MGCF integrated with an MSC. The SIP-AS 24 takes the form of an NG-IN node. This aspect of the invention is described with reference to a VAS that involves a special resource function (SRF) in the form of an Interactive Voice Response function (IVR). A further integrated mobile soft switch (MSS) 210, including an MGCF integrated with an MSC, is associated with the IVR.

Having been contacted by the MGCF 20, in response to a call from a calling party, the SIP-AS sends a SIP Invite to the MGCF 22 associated with the called party. Charging may apply for that call, and the Invite request contains a request for charging data. The MSC/MGCF 22 establishes the call towards the called party as normal, based on information contained in the Invite request. In particular, the MSC will apply regular B-number analysis and Charging analysis for that call leg to determine a charging indication for the call leg. Since the MGCF is integrated in the MSC, the MSC may include this information in upstream SIP signaling towards the SIP-AS. Specifically, the MSC uses internal signaling (OIP) to convey the requested information to the integrated MGCF, and the MGCF may then, in turn, include the requested charging information in a designated SIP message (either in a provisional response message or in the final response message) to the SIP-AS 24, as shown by the arrow 212.

The SIP-AS 24 writes the charging indication received from MGCF into the charging record 220.

Similarly, the SIP-AS 24 establishes a connection with an IVR using an associated MGCF 210, and, upon request from the SIP-AS, this MGCF provides to the SIP-AS charging information pertaining to this IVR connection, as shown by the arrow 214.

Again, the SIP-AS 24 places the charging information in the charging record 220 generated by the SIP-AS.

In a conventional manner, the SIP-AS 24 also places charging data on its own account, relating to the cost of invoking this service, in the charging record 220 generated by the SIP-AS.

The charging record 220 generated by the SIP-AS 24 now contains an aggregation of charging information associated with each individual call leg established by a respective MGCF 22, 210 within the context of this service call, under instruction by the SIP-AS.

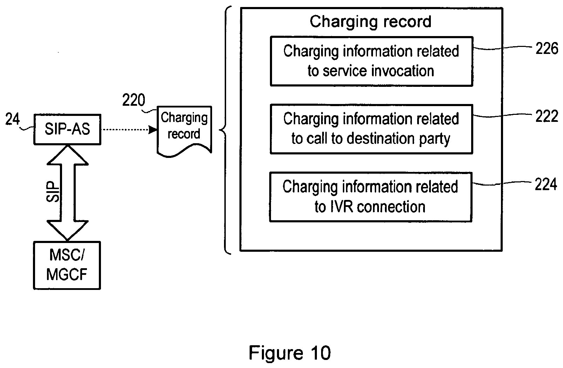

Figure 10 depicts, conceptually, the structure of the charging record 220 generated by the SIP-AS. Thus, the charging record 220 contains the charging information 222 relating to the call to the destination party, received from the respective MGCF as indicated by the arrow 212 in Figure 9; the charging information 224 relating to the IVR connection, received from the respective MGCF as indicated by the arrow 214 in Figure 9; and the charging information 226 relating to the service invocation, received as indicated by the arrow 216 in Figure 9.

Thus, the SIP-AS generates the Charging Data Record (CDR) based on charging data received from one or more MGCFs in response to a request from the SIP-AS.

Having collected all of the charging records, the SIP-AS may provide any party or provider on request with a CDR comprising charging details for processing. This is beneficial where two or more providers cooperate in a call, and where the charging is divided along the providers. This also allows immediate charging processing, and avoids the need for extensive correlation of charging records.

Thus, generally, the invention provides methods that make available SIP application service charging data in a network charging record, without the need for off-line charging record correlation. This has the advantage that it enables real-time charging, and does not require cost-intensive charging record correlation.

## Claims

1. A method of generating charging data for a call in an IP telecommunications network, the method comprising:
establishing (50, 52) a SIP connection between a SIP-AS and an MGCF;
defining (54) in the SIP-AS service related data corresponding to the call;
submitting (56) the defined service related data corresponding to the call in SIP signalling from the SIP-AS to the MGCF via the established SIP connection between the SIP-AS and the MGCF; **characterized by** the method further comprising:
in the MGCF, generating (60) the charging data for the call, based on the submitted service related data corresponding to the call, and inserting the generated charging data for the call into a charging record (80) for the call; and
sending the charging record (80) for the call from the MGCF to a network charging system.

2. A method as claimed in claim 1, wherein the service related data comprises Service charging data.

3. A method as claimed in claim 1 or 2, comprising submitting the service related data in a SIP message header or in a SIP message body.

4. A method as claimed in claim 1, 2 or 3, comprising submitting the service related data in a SIP message to an MGCF with which the SIP-AS is establishing the call, or to an MGCF that is establishing the call with the SIP-AS.

5. A method for use in an MGCF of an IP telecommunications network, for generating charging data for a call, the method comprising:
establishing (52) a SIP connection between a SIP-AS and the MGCF;
receiving (58), by the MGCF from the SIP-AS, service related data corresponding to the call in SIP signalling via the established SIP connection between the SIP-AS and the MGCF; and **characterized by** the method further comprising:
generating (60) the charging data for the call, based on the received service related data corresponding to the call;
inserting the generated charging data for the call into a charging record (80) for the call; and
sending the charging record (80) for the call from the MGCF to a network charging system.

6. A method as claimed in claim 5, wherein the service related data comprises Service charging data.

7. A method as claimed in claim 5 or 6, comprising receiving the service related data in a SIP message header or in a SIP message body.

8. A method as claimed in claim 5, 6 or 7 wherein the MGCF is an MGCF with which the SIP-AS is establishing the call, or is an MGCF that is establishing the call with the SIP-AS.

9. An MGCF (20, 22) for an IP telecommunications network, comprising: an interface circuitry (26, 30) for establishing a SIP connection between a SIP-AS and the MGCF;
a receiving unit (27, 31) for receiving SIP messages from a SIP-AS, and for extracting service related data corresponding to the call from the SIP messages; the MGFC **characterized by** further comprising:
a conversion unit (28, 32) for generating charging data for the call from the extracted service related data corresponding to the call and for inserting the charging data for the call into a charging record (80) for the call; and the interface circuitry (26, 30) for sending the generated charging record (80) for the call from the MGFC to a network charging system.

10. A system comprising a SIP-AS (24) for an IP telecommunications network and an MGFC (20, 22) for an IP telecommunications network, wherein the SIP-AS (24) comprises:
an interface circuitry (34), for establishing a SIP connection between the SIP-AS and the MGCF;
and a definition unit (35), for defining service related data corresponding to a call;
a SIP message assembly unit (36), for incorporating the defined service related data corresponding to the call in a SIP message, and for submitting the defined service related data corresponding to the call in SIP signalling from the SIP-AS to the MGCF via the established SIP connection to the MGFC; and wherein the MGFC (20, 22) comprises:
a receiving unit (27, 31) for receiving the SIP message from the SIP-AS, and for extracting the service related data corresponding to the call from the SIP message, **characterized in that** the MGFC further comprises:
a conversion unit (28, 32) for generating charging data for the call from the extracted service related data corresponding to the call, and for inserting the charging data for the call into a charging record (80) for the call; and an interface circuitry (26, 30) for sending the generated charging record (80) for the call from the MGFC to a network charging system.

11. A system as claimed in claim 10, wherein the SIP message assembly unit is configured to incorporate the defined service related data in a SIP message header or in a SIP message body.

## Patentansprüche

1. Verfahren zum Erzeugen von Gebührenerfassungsdaten für einen Anruf in einem IP-Telekommunikationsnetz, wobei das Verfahren Folgendes umfasst:
Aufbauen (50, 52) einer SIP-Verbindung zwischen einem SIP-AS und einer MGCF;
Definieren (54) von dienstbezogenen Daten, die dem Anruf entsprechen, in dem SIP-AS;
Übermitteln (56) der definierten dienstbezogenen Daten, die dem Anruf entsprechen, in SIP-Signalisierung vom SIP-AS zur MGCF über die hergestellte SIP-Verbindung zwischen dem SIP-AS und der MGCF; **gekennzeichnet durch** das Verfahren, das ferner Folgendes umfasst:
in der MGCF, Erzeugen (60) der Gebührenerfassungsdaten für den Anruf basierend auf den übermittelten dienstbezogenen Daten, die dem Anruf entsprechen, und Einfügen der erzeugten Gebührenerfassungsdaten für den Anruf in einen Gebührenerfassungsdatensatz (80) für den Anruf; und
Senden des Gebührenerfassungsdatensatzes (80) für den Anruf von der MGCF an ein Netzwerkladesystem.

2. Verfahren nach Anspruch 1, wobei die dienstbezogenen Daten Dienstgebührenerfassungsdaten umfassen.

3. Verfahren nach Anspruch 1 oder 2, umfassend das Übermitteln der dienstbezogenen Daten in einem SIP-Nachrichtenkopf oder in einem SIP-Nachrichtentext.

4. Verfahren nach Anspruch 1, 2 oder 3, umfassend das Übermitteln der dienstbezogenen Daten in einer SIP-Nachricht an eine MGCF, mit der der SIP-AS den Anruf aufbaut, oder an eine MGCF, die den Anruf mit dem SIP-AS aufbaut.

5. Verfahren zur Verwendung in einer MGCF eines IP-Telekommunikationsnetzes zum Erzeugen von Gebührenerfassungsdaten für einen Anruf, wobei das Verfahren Folgendes umfasst:
Aufbauen (52) einer SIP-Verbindung zwischen einem SIP-AS und der MGCF;
Empfangen (58), durch die MGCF von dem SIP-AS, dienstbezogener Daten, die dem Anruf entsprechen, in der SIP-Signalisierung über die aufgebaute SIP-Verbindung zwischen dem SIP-AS und der MGCF; und **gekennzeichnet durch** das Verfahren, das ferner Folgendes umfasst:
Erzeugen (60) der Gebührenerfassungsdaten für den Anruf basierend auf den empfangenen dienstbezogenen Daten, die dem Anruf entsprechen;
Einfügen der erzeugten Gebührenerfassungsdaten für den Anruf in einen Gebührenerfassungsdatensatz (80) für den Anruf; und
Senden des Gebührenerfassungsdatensatzes (80) für den Anruf von der MGCF an ein Netzwerkladesystem.

6. Verfahren nach Anspruch 5, wobei die dienstbezogenen Daten Dienstgebührenerfassungsdaten umfassen.

7. Verfahren nach Anspruch 5 oder 6, umfassend das Empfangen der dienstbezogenen Daten in einem SIP-Nachrichtenkopf oder in einem SIP-Nachrichtentext.

8. Verfahren nach Anspruch 5, 6 oder 7, wobei der MGCF eine MGCF ist, mit der der SIP-AS den Anruf aufbaut, oder eine MGCF ist, die den Anruf mit dem SIP-AS aufbaut.

9. MGCF (20, 22) für ein IP-Telekommunikationsnetz, umfassend: eine Schnittstellenschaltung (26, 30) zum Aufbauen einer SIP-Verbindung zwischen einem SIP-AS und der MGCF;
eine Empfangseinheit (27, 31) zum Empfangen von SIP-Nachrichten von einem SIP-AS und zum Extrahieren von dienstbezogenen Daten, die dem Anruf entsprechen, aus den SIP-Nachrichten; wobei die MGFC ferner **dadurch gekennzeichnet ist, dass** sie Folgendes umfasst:
eine Umwandlungseinheit (28, 32) zum Erzeugen von Gebührenerfassungsdaten für den Anruf aus den extrahierten dienstbezogenen Daten, die dem Anruf entsprechen, und zum Einfügen der Gebührenerfassungsdaten für den Anruf in eine Gebührenaufzeichnung (80) für den Anruf; und die Schnittstellenschaltung (26, 30) zum Senden des erzeugten Gebührenerfassungsdatensatzes (80) für den Anruf von der MGFC an ein Netzwerkladesystem.

10. System, das einen SIP-AS (24) für ein IP-Telekommunikationsnetzwerk und eine MGFC (20, 22) für ein IP-Telekommunikationsnetz umfasst, wobei der SIP-AS (24) umfasst:
eine Schnittstellenschaltung (34) zum Aufbauen einer SIP-Verbindung zwischen dem SIP-AS und der MGCF;
und
eine Definitionseinheit (35) zum Definieren von dienstbezogenen Daten, die einem Anruf entsprechen;
eine SIP-Nachrichtenassemblierungseinheit (36) zum Aufnehmen der definierten dienstbezogenen Daten, die dem Anruf entsprechen, in einer SIP-Nachricht und zum Übermitteln der definierten dienstbezogenen Daten, die dem Anruf entsprechen, in der SIP-Signalisierung vom SIP-AS an die MGCF über die aufgebaute SIP-Verbindung zur MGFC; und wobei die MGFC (20, 22) Folgendes umfasst:
eine Empfangseinheit (27, 31) zum Empfangen der SIP-Nachricht von dem SIP-AS und zum Extrahieren der dienstbezogenen Daten, die dem Anruf entsprechen, aus der SIP-Nachricht, **gekennzeichnet dadurch, dass** die MGFC ferner Folgendes umfasst:
eine Umwandlungseinheit (28, 32) zum Erzeugen von Gebührenerfassungsdaten für den Anruf aus den extrahierten dienstbezogenen Daten, die dem Anruf entsprechen, und zum Einfügen der Gebührenerfassungsdaten für den Anruf in einen Gebührenerfassungsdatensatz (80) für den Anruf; und eine Schnittstellenschaltung (26, 30) zum Senden des erzeugten Gebührenerfassungsdatensatzes (80) für den Anruf von der MGFC an ein Netzwerkladesystem.

11. System nach Anspruch 10,
wobei die SIP-Nachrichtenassemblierungseinheit konfiguriert ist, um die definierten dienstbezogenen Daten in einen SIP-Nachrichtenkopf oder in einen SIP-Nachrichtentext aufzunehmen.

## Revendications

1. Procédé de génération de données de facturation pour un appel dans un réseau de télécommunications IP, le procédé comprenant de :
établir (50,52) une connexion SIP entre un SIP-AS et une MGFC ;
définir (54) dans la SIP-As des données relatives au service correspondant à l'appel ;
soumettre (56) les données relatives au services définies correspondant à l'appel dans une signalisation SIP du SIP-AS vers la MGFC via la connexion SIP établie entre le SIP-AS et la MGFC ; **caractérisé en ce que** le procédé comprend en outre de :
dans la MGFC, générer (60) les données de facturation pour l'appel, sur la base des données relatives au service soumises correspondant à l'appel, et insérer les données de facturation générées pour l'appel dans un registre de facturation (80) pour l'appel ; et
envoyer le registre de facturation (80) pour l'appel de la MGFC à un système de facturation de réseau.

2. Procédé selon la revendication 1, dans lequel les données relatives au service comprennent des données de facturation de service.

3. Procédé selon la revendication 1 ou 2, comprenant de soumettre les données relatives au service dans un en-tête de message SIP ou un corps de message SIP.

4. Procédé selon la revendication 1, 2 ou 2, comprenant de soumettre les données relatives au service dans un message SIP à une MGFC avec laquelle le SIP-AS est en train d'établir l'appel, ou vers une MGFC qui est en train d'établir l'appel vers le SIP-AS.

5. Procédé à utiliser dans une MGFC d'un réseau de télécommunications IP, pour générer des données de facturation pour un appel, le procédé comprenant de :
établir (52) une connexion SIP entre un SIP-AS et la MGFC ;
recevoir (58), par la MGFC depuis le SIP-AS, des données relatives au service correspondant à l'appel dans une signalisation SIP via la connexion SIP établie entre le SIP-AS et la MGFC ; et **caractérisé par** le procédé comprenant en outre de :
générer (60) les données de facturation pour l'appel, sur la base des données relatives au service reçues correspondant à l'appel ;
insérer les données de facturation générées pour l'appel dans un registre de facturation (80) pour l'appel ; et
envoyer le registre de facturation (80) pour l'appel de la MGFC vers un système de facturation de réseau.

6. Procédé selon la revendication 5, dans lequel les données relatives au service comprennent des données de facturation de service.

7. Procédé selon la revendication 5 ou 6, comprenant de recevoir les données relatives au service dans un en-tête de message SIP ou dans un corps de message SIP.

8. Procédé selon la revendication 5, 6 ou 7, dans lequel la MGFC est une MGFC avec laquelle le SIP-AS est en train d'établir l'appel, ou est une MGFC qui est en train d'établir l'appel avec le SIP-AS.

9. MGFC (20,22) pour un réseau de télécommunications IP, comprenant :
des circuits d'interface (26,30) pour établir une connexion SIP entre un SIP-AS et la MGFC ;
une unité de réception (27,31) pour recevoir des messages SIP depuis un SIP-AS, et pour extraire des données relatives au service correspondant à l'appel des messages SIP ; la MGFC étant **caractérisé en ce qu'**elle comprend en outre :
une unité de conversion (28,32) pour générer des données de facturation pour l'appel d'après les données relatives au service extraites correspondant à l'appel et pour insérer les données de facturation pour l'appel dans un registre de facturation (80) pour l'appel ; et les circuits d'interface (26,30) pour envoyer le registre de facturation généré (80) pour l'appel de la MGFC vers un système de facturation de réseau.

10. Système comprenant un SIP-AS (24) pour un réseau de télécommunications IP et une MGFC (20,22) pour un réseau de télécommunications IP, dans lequel le SIP-AS (24) comprend :
des circuits d'interface (34), pour établir une connexion SIP entre le SIP-AS et la MGFC ;
et
une unité de définition (35), pour définir des données relatives au service correspondant à un appel ;
une unité d'assemblage de message SIP (36), pour incorporer les données relatives au service définies correspondant à l'appel dans un message SIP, et pour soumettre les données relatives au service définies correspondant à l'appel dans une signalisation SIP du SIP-AS vers la MGFC via la connexion SIP établie vers la MGFC ; et dans lequel la MGFC (20,22) comprend :
une unité de réception (27,31) pour recevoir le message SIP depuis le SIP-AS, et pour extraire les données relatives au service correspondant à l'appel du message SIP, **caractérisé en ce que** la MGFC comprend en outre :
une unité de conversion (28,32) pour générer des données de facturation pour l'appel d'après les données relatives au service extraites correspondant à l'appel ; et
pour insérer les données de facturation pour l'appel dans un registre de facturation (80) pour l'appel ; et des circuits d'interface (26,30) pour envoyer le registre de facturation généré (80) pour l'appel de la MGFC vers un système de facturation de réseau.

11. Système selon la revendication 10,
dans lequel l'unité d'assemblage de message SIP est configurée pour incorporer les données relatives au service définies dans un en-tête de message SIP ou dans un corps de message SIP.
